# EUROPEAN PATENT APPLICATION

(11) **EP 3 136 231 A1**
(43) Date of publication of application: **01.03.2017**
(21) Application number: 16178829.4
(22) Date of filing: 11.07.2016
(51) Int. Cl.: G06F 9/44

(54) **METHOD AND DEVICE FOR INSTALLING PLUG-IN OF SMART DEVICE**

(30) Priority: 28.08.2015 CN 201510542313
(71) Applicant: Xiaomi Inc., Beijing 100085 (CN)
(72) Inventor: LI, Feiyun, BEIJING, 100085 (CN); CHEN, Hao, BEIJING, 100085 (CN); HOU, Enxing, BEIJING, 100085 (CN)
(74) Representative: Cougard, Jean-Marie

(57) **Abstract**

The present disclosure relates to a method and a device for installing a plug-in of a smart device. The method includes: receiving (S11) a selection instruction for selecting a smart device; sending (S12) a plug-in acquiring request to a server if a plug-in of the smart device is not installed, in which the plug-in acquiring request includes an identifier of the smart device; receiving (S13) a plug-in installation package sent by the server according to the plug-in acquiring request; and running (S14) the plug-in installation package and installing (S14) the plug-in in an application, in which the application is configured to control the smart device via the plug-in.

## Description

This application is based on and claims priority to Chinese Patent Application Serial No. CN 201510542313.4, filed with the State Intellectual Property Office of P. R. China on August 28, 2015, the entire content of which is incorporated herein by reference.

### FIELD

The present disclosure relates to the field of smart home technology, and more particularly to a method and a device for installing a plug-in of a smart device.

### BACKGROUND

Smart home is a housing-based management system efficiently dealing with residential facilities and family affairs, and integrated with home-related facilities using comprehensive wiring technology, network communication technology, security precautions technology, automatic control technology and audiovisual technology, such that home safety, convenience, comfortableness and artistry are improved, and an eco-friendly and energy-saving living environment is realized.

In the related art, a user performs a uniform management on smart devices via a terminal device with an application (app) for controlling smart devices installed on it, thus realizing the smart home.

The application for controlling the smart devices has a control function to all smart devices. With increasing types of the smart devices, the application for controlling the smart devices is updated accordingly, and the updated application for controlling smart devices has a larger and larger size, such that an operation speed of the mobile terminal is slow, and a user experience is poor.

### SUMMARY

In order to solve problems in the related art, the present disclosure provides a method and a device for installing a plug-in of a smart device.

According to embodiments of a first aspect of the present disclosure, a method applied in a terminal for installing a plug-in of a smart device is provided. The method includes:
receiving a selection instruction for selecting a smart device;
sending a plug-in acquiring request to a server if a plug-in of the smart device is not installed in said terminal, in which the plug-in acquiring request includes an identifier of the smart device;
receiving a plug-in installation package from the server in response to the plug-in acquiring request; and
running the plug-in installation package and installing the plug-in in an application in said terminal, in which the application is configured to control the smart device via the plug-in.

In a possible implementation of the first aspect, the method further includes:
jumping to a user operation interface of the smart device if the plug-in has been installed.

In another possible implementation of the first aspect, receiving a selection instruction for selecting a smart device includes:
Obtaining, from a server, information of a plurality of smart devices;
outputting the information of the plurality of smart devices on a smart device selection interface; and
receiving the selection instruction input via the smart device selection interface.

In yet another possible implementation of the first aspect, the method further includes:
jumping to a user operation interface of the smart device after installing the plug-in in the application configured to control smart devices

In still yet another possible implementation of the first aspect, the method further includes:
sending the plug-in acquiring request to the server if a plug-in has been installed of the smart device but the version of said installed plug-in is not latest predefined version.

According to embodiments of a second aspect of the present disclosure, a method for installing a plug-in of a smart device is provided. The method includes:
receiving a plug-in acquiring request including an identifier of the smart device; and
sending a plug-in installation package of the smart device corresponding to the identifier of the smart device according to the plug-in acquiring request, in which the plug-in installation package is configured to install the plug-in in an application, and the application is configured to control the smart device via the plug-in.

In a possible implementation of the second aspect, the method further includes:
receiving the plug-in installation package; and
saving and publishing the plug-in installation package received.

In a particular embodiment, the steps of the method for installing a plug-in of a smart device are determined by computer program instructions.

Consequently, according to a particular aspect, the invention is also directed to a computer program for executing the steps of a method as defined above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as defined above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

According to embodiments of a third aspect of the present disclosure, a device for installing a plug-in of a smart device is provided. The device includes:
an instruction receiving module, configured to receive a selection instruction for selecting a smart device;
a sending module, configured to send a plug-in acquiring request to a server if a plug-in of the smart device is not installed in said device, in which the plug-in acquiring request includes an identifier of the smart device;
an installation package receiving module, configured to receive a plug-in installation package from the server in response to the plug-in acquiring request; and
an installing module, configured to run the plug-in installation package and install the plug-in in an application in said device, in which the application is configured to control the smart device via the plug-in.

In a possible implementation of the third aspect, the device further includes:
a jumping module, configured to jump to a user operation interface of the smart device if the plug-in has been installed.

In another possible implementation of the third aspect, the device further includes:
an obtaining sub-module, configured to obtain information of a plurality of smart devices sent by the server;
an output sub-module, configured to output the information of the plurality of smart devices on a smart device selection interface; and
a receiving sub-module, configured to receive the selection instruction input via the smart device selection interface.

In yet another possible implementation of the third aspect, the device further includes:
a jumping module, configured to jump to a user operation interface of the smart device after the plug-in is installed in the application configured to control smart devices.

In still yet another possible implementation of the third aspect, the sending module is further configured to:
send the plug-in acquiring request to the server if a plug-in of the smart device has been installed in said device but the version of said installed plug-in is not latest predetermined version.

According to embodiments of a fourth aspect of the present disclosure, a device for installing a plug-in of a smart device is provided. The device includes:
a request receiving module, configured to receive a plug-in acquiring request including an identifier of the smart device; and
a sending module, configured to send a plug-in installation package of the smart device corresponding to the identifier of the smart device according to the plug-in acquiring request, in which the plug-in installation package is configured to install the plug-in in an application in said device, and the application is configured to control the smart device via the plug-in.

In a possible implementation of the fourth aspect, the device further includes:
an installation package receiving module, configured to receive the plug-in installation package; and
a processing module, configured to save and publish the plug-in installation package received.

According to embodiments of a fifth aspect of the present disclosure, a device for installing a plug-in of a smart device is provided. The device includes:
a processor; and
a memory, configured to store instructions executable by the processor;
wherein, the processor is configured to:
   receive a selection instruction for selecting a smart device;
   send a plug-in acquiring request to a server if a plug-in of the smart device is not installed in said device, in which the plug-in acquiring request comprises an identifier of the smart device;
   receive a plug-in installation package from the server in response to the plug-in acquiring request; and
   run the plug-in installation package and install the plug-in in an application in said device, in which the application is configured to control the smart device via the plug-in.

According to embodiments of a sixth aspect of the present disclosure, a device for installing a plug-in of a smart device is provided. The device includes:
a processor; and
a memory, configured to store instructions executable by the processor;
wherein, the processor is configured to:
   receive a plug-in acquiring request comprising an identifier of the smart device; and
   send a plug-in installation package of the smart device corresponding to the identifier of the smart device according to the plug-in acquiring request, in which the plug-in installation package is configured to install the plug-in in an application in said device, and the application is configured to control the smart device via the plug-in.

The technical solutions provided in the present disclosure may include the following beneficial effects. If the plug-in of the smart device is not installed, the plug-in acquiring request is sent to the server, the plug-in installation package sent by the server according to the plug-in acquiring request is received, the plug-in installation package is run and the plug-in is installed in the application, in which the application is configured to control the smart device via the plug-in. Since plug-ins installed in the application may be controlled to increase or decrease according to smart devices controlled by the application, the size of the application controlling all the smart devices is effectively limited, the operation speed of the terminal is increased, and the user experience is good.

It should be understood that, the above general description and following detail description are exemplary and explanatory, and shall not be construed to limit the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram of an application scene in which a method for installing a plug-in of a smart device according to an example embodiment is applied.
Fig. 2 is a flow chart of a method for installing a plug-in of a smart device according to an example embodiment.
Fig. 3 is a flow chart of a method for installing a plug-in of a smart device according to an example embodiment.
Fig. 4 is a flow chart of a method for installing a plug-in of a smart device according to an example embodiment.
Fig. 5 is a flow chart of a method for installing a plug-in of a smart device according to an example embodiment.
Fig. 6 is a block diagram of a device for installing a plug-in of a smart device according to an example embodiment.
Fig. 7 is a block diagram of a device for installing a plug-in of a smart device according to an example embodiment.
Fig. 8 is a block diagram of a device for installing a plug-in of a smart device according to an example embodiment.
Fig. 9 is a block diagram of a device for installing a plug-in of a smart device according to an example embodiment.
Fig. 10 is a block diagram of a device for installing a plug-in of a smart device according to an example embodiment.
Fig. 11 is a block diagram of a device for installing a plug-in of a smart device according to an example embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

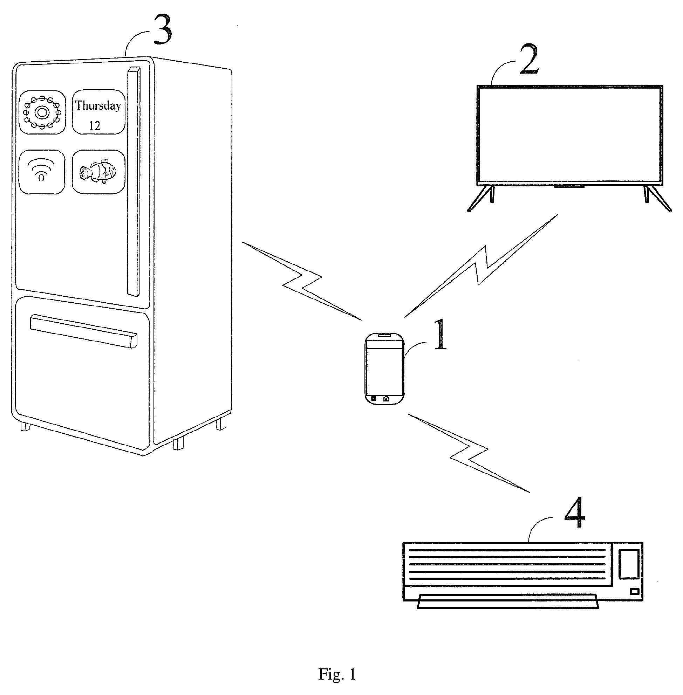

Now, an application scene where a method for installing a plug-in of a smart device according to embodiments of the present disclosure is described with reference to Fig. 1. As shown in Fig. 1, an application for controlling smart devices is installed in a mobile terminal 1, and three devices 2, 3, 4 (called hereinafter "smart devices") are wirelessly connected to the mobile terminal 1. The smart devices may include but not limited to a smart air conditioner, a smart TV, a smart washer, a smart refrigerator, a robot cleaner, a smart curtain, a security system, an illuminating system, an audio-visual system, and a smart plug. The three smart devices may be of an identical type, or may be of different types, e.g. the smart device 2 is the smart TV, the smart device 3 is the smart refrigerator, and the smart device 4 is the smart air conditioner.

It should be noted that, the application scene shown in Fig. 1 is exemplary and explanatory, and shall not be construed to limit the present disclosure, e.g. a number of the smart devices connected to the mobile terminal 1 may be one, two, four or five etc.

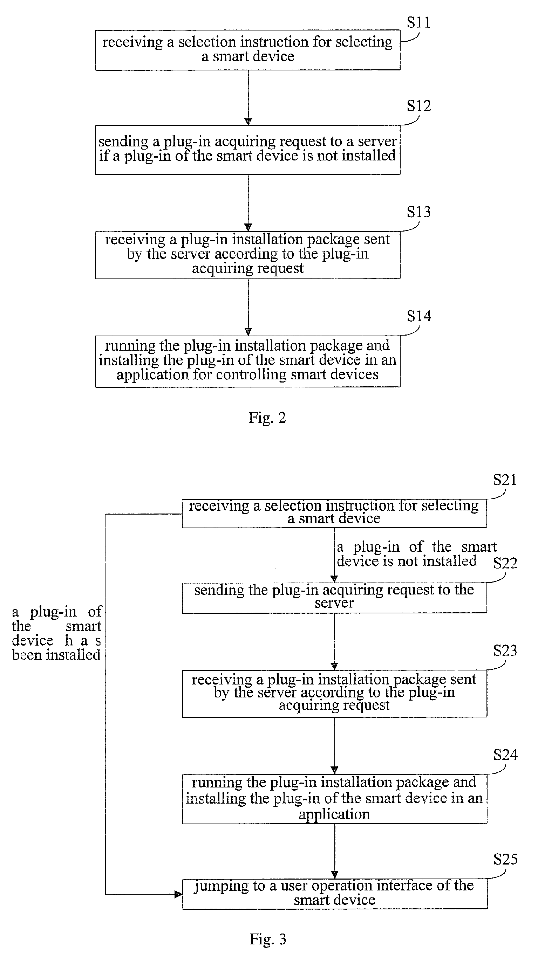

Fig. 2 is a flow chart of a method for installing a plug-in of a smart device according to an example embodiment. As shown in Fig. 2, the method is performed by a terminal (such as in mobile terminal 1 or in any other appropriate terminal), including steps as follows.

In step S11, a selection instruction for selecting a smart device is received.

In step S12, if a plug-in of the smart device is not installed in the terminal, a plug-in acquiring request is sent to a server.

In the present embodiment, the plug-in acquiring request includes an identifier of the smart device.

In step S13, a plug-in installation package sent by the server in response to the plug-in acquiring request is received.

In step S14, the plug-in installation package is run and the plug-in is installed in an application in said terminal.

In the present embodiment, the application is configured to control the smart device via the plug-in. The plug-in of the smart device includes a user operation interface of the smart device and a control interface of the smart device.

In embodiments of the present disclosure, if a plug-in of the smart device is not installed in the terminal, the plug-in acquiring request is sent to the server, the plug-in installation package sent by the server according to the plug-in acquiring request is received, the plug-in installation package is run and the plug-in is installed in the application, in which the application is configured to control the smart device via the plug-in. Since plug-ins installed in the application may be controlled to increase or decrease according to smart devices controlled by the application, the size of the application controlling all the smart devices is effectively limited, the operation speed of the terminal is increased, and the user experience is good.

Fig. 3 is a flow chart of a method for installing a plug-in of a smart device according to an example embodiment. As shown in Fig. 3, the method is performed on a terminal (such as in mobile terminal 1 or in any other appropriate terminal), including steps as follows.

In step S21, a selection instruction for selecting a smart device is received. If a plug-in of the smart device is not installed, steps S22-S25 are executed; if the plug-in of the smart device is installed, step S25 is executed.

In an implementation of the present embodiment, step S21 may include:
obtaining information of a plurality of smart devices sent by the server;
outputting the information of the plurality of smart devices on a smart device selection interface; and
receiving the selection instruction input via the smart device selection interface.

In practical use, when a user opens an application controlling all smart devices via a terminal, the terminal may send a smart device acquiring request to a server, the server sends information of a plurality of smart devices bound to the terminal to the terminal. The terminal outputs the information of the plurality of smart devices on a smart device selection interface and receives a selection instruction input via the smart device selection interface, thus determining smart devices to be controlled.

In step S22, a plug-in acquiring request is sent to a server.

In the present embodiment, the plug-in acquiring request includes an identifier of the smart device.

In an implementation of the present embodiment, the method may further include the following operations.

If a plug-in of the selected smart device has been installed in the terminal but the version of the installed plug-in is not the latest version (i.e. not a predetermined version of the plug-in), the plug-in acquiring request is sent to the server.

As the number of smart devices increases, plug-ins of the smart devices may be developed accordingly, and thus a plug-in downloaded from the server may not be originally present in the terminal; meanwhile, the smart device will keep updating, and the plug-in of the smart device will keep updating accordingly, and thus the plug-ins previously downloaded by the terminal from the server may also not be the latest version, which shall not be construed to limit the present disclosure.

In step S23, a plug-in installation package sent by the server in response to the plug-in acquiring request is received.

In the present embodiment, the plug-in installation package, e.g. an APK (Android Package), is configured to install the plug-in of the smart device in the application in the terminal.

In step S24, the plug-in installation package is run and the plug-in is installed in an application in the terminal.

In the present disclosure, the application is configured to control the smart device via the plug-in. The plug-in of the smart device includes a user operation interface of the smart device and a control interface of the smart device.

In step S25, jumping to (or switching display to) a user operation interface of the smart device is performed.

In the present document, by "jumping to" it should be understood "switching display to".

It should be understood that, in the user operation interface of the smart device, a user may input a control instruction (e.g. opening or closing the smart device), and the terminal calls a control interface of the smart device according to the control instruction, thus performing corresponding control on the smart device.

In embodiments of the present disclosure, if a plug-in of the smart device is not installed in the terminal, the plug-in acquiring request is sent to the server, the plug-in installation package sent by the server in response to the plug-in acquiring request is received, the plug-in installation package is run and the plug-in is installed in the application, in which the application is configured to control the smart device via the plug-in. Since plug-ins installed in the application may be controlled to increase or decrease according to smart devices controlled by the application, the size of the application controlling all the smart devices is effectively prevented from becoming larger and larger, the operation speed of the terminal is increased, and the user experience is good.

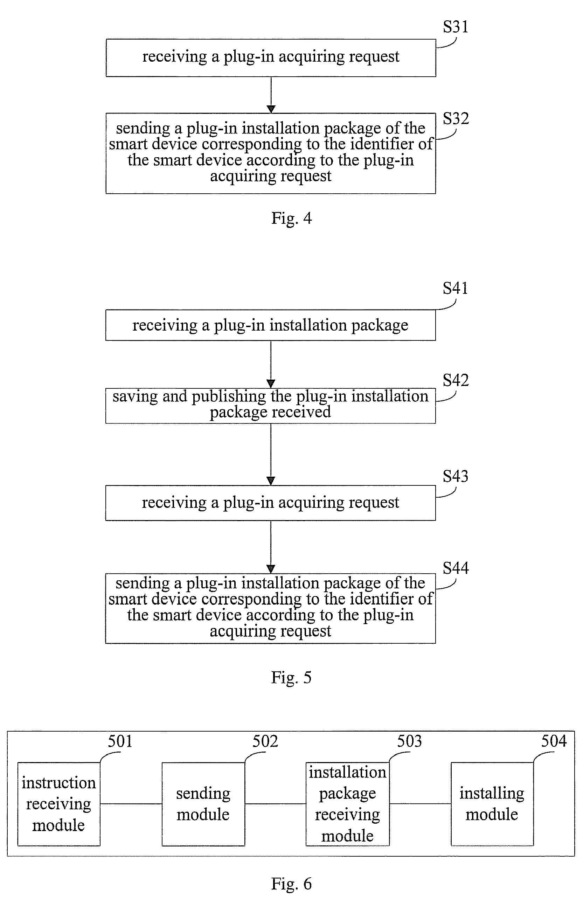

Fig. 4 is a flow chart of a method for installing a plug-in of a smart device according to an example embodiment. As shown in Fig. 4, the method is performed by a server, including steps as follows.

In step S31, a plug-in acquiring request is received.

In the present embodiment, the plug-in acquiring request includes an identifier of a smart device.

In step S32, a plug-in installation package of the smart device corresponding to the identifier in the plug-in acquiring request is sent in response to the plug-in acquiring request.

In the present disclosure, the plug-in installation package is configured to install a plug-in of the smart device in an application. The application is configured to control the smart device via the plug-in. The plug-in of the smart device includes a user operation interface of the smart device and a control interface of the smart device.

In embodiments of the present disclosure, a plug-in installation package of the smart device corresponding to the identifier of the smart device is sent in response to the plug-in acquiring request, in which the plug-in of the smart device includes a user operation interface of the smart device and a control interface of the smart device, and the application is configured to control the smart device via the plug-in. Since plug-ins installed in the application may be controlled to increase or decrease according to smart devices controlled by the application, the size of the application controlling all the smart devices is effectively avoided from becoming larger and larger, the operation speed of the terminal is increased, and the user experience is good.

Fig. 5 is a flow chart of a method for installing a plug-in of a smart device according to an example embodiment. As shown in Fig. 5, the method is performed by a server, including steps as follows.

In step S41, a plug-in installation package is received. Step S41 is an alternative step.

In practical use, the plug-in installation package may be developed by a developer on the basis of a plug-in development kit. The plug-in development kit, i.e. a SDK (Software Development Kit), may be published on a website for being downloaded and used by the developer, which is convenient for the developer to develop a user operation interface and a control interface of each smart device on the basis of the SDK.

Alternatively, the SDK may include a smart device interface library and a user operation interface library. The smart device interface library is configured to provide an interface (e.g. a plugin_lib) for an application to control a smart device via a plug-in of the smart device, and the user operation interface library is configured to provide an operation interface (e.g. a common_ui) for a user to control the application.

It is obvious that, developing the user operation interface of the smart device may be realized by calling the user operation interface library, and developing the control interface of the smart device may be realized by calling the smart device interface library.

In step S42, the plug-in installation package received is saved and published. Step S42 is an alternative step.

It can be understood that, the plug-in installation package saved and published by the server is sent by a certain terminal, and all terminals may download various kinds of plug-in installation packages via the server, thus realizing a control on various kinds of smart devices.

Signature information may be set in the plug-in installation package, in case of being forged and tampered. In practical use, the server checks the signature information in the plug-in installation package before publishing the plug-in installation package received, and will not publish the plug-in installation package until it passes the checking.

Alternatively, the plug-in installation package received may be a plug-in installation package which has not been saved in the server, and may also be an updated version of the plug-in installation package saved in the server.

In step S43, a plug-in acquiring request is received.

In the present embodiment, the plug-in acquiring request includes an identifier of the smart device.

In step S44, a plug-in installation package of the smart device corresponding to the identifier of the smart device is sent according to the plug-in acquiring request.

In the present disclosure, the plug-in installation package is configured to install a plug-in of the smart device in an application. The application is configured to control the smart device via the plug-in. The plug-in of the smart device includes a user operation interface of the smart device and a control interface of the smart device.

In embodiments of the present disclosure, a plug-in installation package of the smart device corresponding to the identifier of the smart device is sent in response to the plug-in acquiring request, in which the plug-in installation package is configured to install the plug-in of the smart device in the application, and the application is configured to control the smart device via the plug-in. Since plug-ins installed in the application may be controlled to increase or decrease according to smart devices controlled by the application, the size of the application controlling all the smart devices is effectively avoided from becoming larger and larger, the operation speed of the terminal is increased, and the user experience is good.

Fig. 6 is a block diagram of a device (or a terminal, such as a mobile terminal) for installing a plug-in of a smart device according to an example embodiment. As shown in Fig. 6, the device includes an instruction receiving module 501, a sending module 502, an installation package receiving module 503 and an installation module 504.

The instruction receiving module 501 is configured to receive a selection instruction for selecting a smart device.

The sending module 502 is configured to send a plug-in acquiring request to a server if a plug-in of the smart device is not installed in the device, in which the plug-in acquiring request includes an identifier of the smart device.

The installation package receiving module 503 is configured to receive a plug-in installation package sent by the server in response to the plug-in acquiring request.

The installation module 504 is configured to run the plug-in installation package and install the plug-in in an application in the device, in which the application is configured to control the smart device via the plug-in.

In embodiments of the present disclosure, if the plug-in of the smart device is not installed, the plug-in acquiring request is sent to the server, the plug-in installation package sent by the server in response to the plug-in acquiring request is received, the plug-in installation package is run and the plug-in is installed in the application in the device, in which the application is configured to control the smart device via the plug-in. Since plug-ins installed in the application may be controlled to increase or decrease according to smart devices controlled by the application, the size of the application controlling all the smart devices is effectively avoided from becoming larger and larger, the operation speed of the terminal is increased, and the user experience is good.

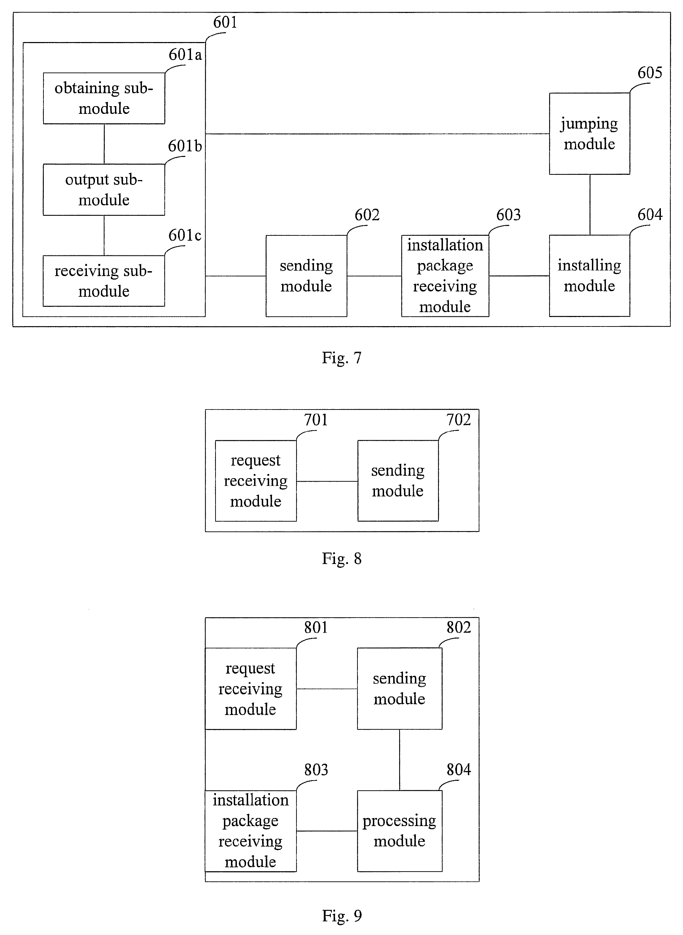

Fig. 7 is a block diagram of a device (or terminal) for installing a plug-in of a smart device according to an example embodiment. As shown in Fig. 7, the device includes an instruction receiving module 601, a sending module 602, an installation package receiving module 603 and an installation module 604.

The instruction receiving module 601 is configured to receive a selection instruction for selecting a smart device.

The sending module 602 is configured to send a plug-in acquiring request to a server if a plug-in of the smart device is not installed in the device, in which the plug-in acquiring request includes an identifier of the smart device.

The installation package receiving module 603 is configured to receive a plug-in installation package sent by the server in response to the plug-in acquiring request.

The installation module 604 is configured to run the plug-in installation package and install the plug-in in an application in the device, in which the application is configured to control the smart device via the plug-in.

In an implementation of the present embodiment, the device may further include a jumping module 605.

The jumping module 605 is configured to jump to a user operation interface of the smart device if the plug-in has been installed.

In another implementation of the present embodiment, the instruction receiving module 601 may include an obtaining sub-module 601a, an output sub-module 601b, and a receiving sub-module 601c.

The obtaining sub-module 601a is configured to obtain information of a plurality of smart devices sent by the server.

The output sub-module 601b is configured to output the information of the plurality of smart devices on a smart device selection interface.

The receiving sub-module 601c is configured to receive the selection instruction input via the smart device selection interface.

In yet another implementation of the present embodiment, the device may further include a jumping module 605.

The jumping module 605 is configured to jump to a user operation interface of the smart device after the plug-in is installed in the application configured to control smart devices.

In yet another implementation of the present embodiment, the sending module 602 may be further configured to send the plug-in acquiring request to the server if a plug-in of the smart device has been installed in the device but the version of the installed plug-in is not the latest version (i.e. not a predetermined version).

In embodiments of the present disclosure, if the plug-in of the smart device is not installed, the plug-in acquiring request is sent to the server, the plug-in installation package sent by the server in response to the plug-in acquiring request is received, the plug-in installation package is run and the plug-in is installed in the application, in which the application is configured to control the smart device via the plug-in. Since plug-ins installed in the application may be controlled to increase or decrease according to smart devices controlled by the application, the size of the application controlling all the smart devices is effectively avoided from becoming larger and larger, the operation speed of the terminal is increased, and the user experience is good.

Fig. 8 is a block diagram of a device (or server) for installing a plug-in of a smart device according to an example embodiment. As shown in Fig. 8, the device includes a request receiving module 701 and a sending module 702.

The request receiving module 701 is configured to receive a plug-in acquiring request, the plug-in acquiring request including an identifier of the smart device.

The sending module 702 is configured to send a plug-in installation package of the smart device corresponding to the identifier of the smart device in response to the plug-in acquiring request, in which the plug-in installation package is configured to install the plug-in in an application, and the application is configured to control the smart device via the plug-in.

In embodiments of the present disclosure, a plug-in installation package of the smart device corresponding to the identifier of the smart device is sent in response to the plug-in acquiring request, in which the plug-in installation package is configured to install the plug-in of the smart device in the application, and the application is configured to control the smart device via the plug-in. Since plug-ins installed in the application may be controlled to increase or decrease according to smart devices controlled by the application, the size of the application controlling all the smart devices is effectively avoided from becoming larger and larger, the operation speed of the terminal is increased, and the user experience is good.

Fig. 9 is a block diagram of a device (or terminal) for installing a plug-in of a smart device according to an example embodiment. As shown in Fig. 9, the device includes a request receiving module 801 and a sending module 802.

The request receiving module 801 is configured to receive a plug-in acquiring request, the plug-in acquiring request including an identifier of the smart device.

The sending module 802 is configured to send a plug-in installation package of the smart device corresponding to the identifier of the smart device according to the plug-in acquiring request, in which the plug-in installation package is configured to install the plug-in in an application, and the application is configured to control the smart device via the plug-in.

In an implementation of the present embodiment, the device may further include an installation package receiving module 803 and a processing module 804.

The installation package receiving module 803 is configured to receive the plug-in installation package.

The processing module 804 is configured to save and publish the plug-in installation package received.

In embodiments of the present disclosure, a plug-in installation package of the smart device corresponding to the identifier of the smart device is sent in response to the plug-in acquiring request, in which the plug-in installation package is configured to install the plug-in of the smart device in an application, and the application is configured to control the smart device via the plug-in. Since plug-ins installed in the application may be controlled to increase or decrease according to smart devices controlled by the application, the size of the application controlling all the smart devices is effectively limited, the operation speed of the terminal is increased, and the user experience is good.

With respect to the devices in the above embodiments, the specific operation modes of individual modules therein have been described in detail in the embodiments regarding the method, which will not be elaborated herein.

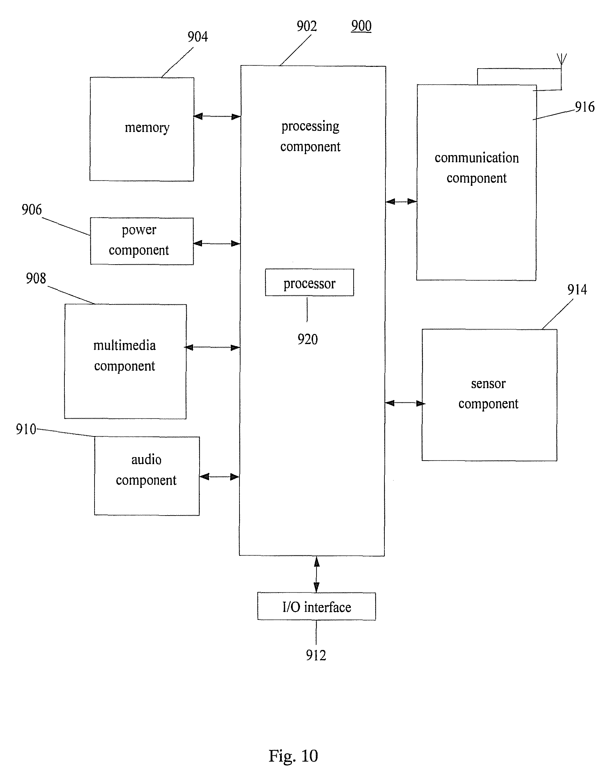

Fig. 10 is a block diagram of a device 900 for installing a plug-in of a smart device according to an example embodiment. For example, the device 900 may be a mobile phone, a computer, a digital broadcasting terminal, a messaging device, a game console, a tablet device, a fitness equipment, a Personal Digital Assistant PDA, etc.

Referring to Fig. 10, the device 900 may include the following one or more components: a processing component 902, a memory 904, a power component 906, a multimedia component 908, an audio component 910, an Input/Output (I/O) interface 912, a sensor component 914, and a communication component 916.

The processing component 902 typically controls overall operations of the device 900, such as the operations associated with display, telephone calls, data communications, camera operations, and recording operations. The processing component 902 may include one or more processors 920 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the device 900. Examples of such data include instructions for any applications or methods operated on the device 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 may include a power management system, one or more power sources, and any other components associated with the generation, management, and distribution of power in the device 900.

The multimedia component 908 includes a screen providing an output interface between the device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and other gestures on the touch panel. The touch sensors may not only sense a boundary of a touch or swipe action, but also sense a duration time and a pressure associated with the touch or swipe action. In some embodiments, the multimedia component 908 includes a front camera and/or a rear camera. The front camera and the rear camera may receive external multimedia data while the device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone (MIC) configured to receive an external audio signal when the intelligent device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface for the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the device 900. For instance, the sensor component 914 may detect an open/closed status of the device 900 and relative positioning of components (e.g. the display and the keypad of the device 900). The sensor component 914 may also detect a change in position of the device 900 or of a component in the device 900, a presence or absence of user contact with the device 900, an orientation or an acceleration/deceleration of the device 900, and a change in temperature of the device 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate wired or wireless communication between the device 900 and other devices. The device 900 can access a wireless network based on a communication standard, such as WIFI, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 904 including instructions. The above instructions are executable by the processor 920 in the device 900, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium having stored therein instructions that, when executed by a processor of a terminal (such as a mobile device), causes the device to perform a method for installing a plug-in of a smart device, the method including:
receiving a selection instruction for selecting a smart device;
sending a plug-in acquiring request to a server if a plug-in of the smart device is not installed in the terminal, in which the plug-in acquiring request includes an identifier of the smart device;
receiving a plug-in installation package sent by the server in response to the plug-in acquiring request; and
running the plug-in installation package and installing the plug-in in an application in the terminal, in which the application is configured to control the smart device via the plug-in.

In an implementation of the present embodiment, the method further includes:
jumping to a user operation interface of the smart device if the plug-in has been installed.

In another implementation of the present embodiment, receiving a selection instruction for selecting a smart device includes:
obtaining information of a plurality of smart devices sent by the server;
outputting the information of the plurality of smart devices on a smart device selection interface; and
receiving the selection instruction input via the smart device selection interface.

In yet another implementation of the present embodiment, the method further includes:
jumping to a user operation interface of the smart device after installing the plug-in in the application configured to control smart devices.

In still yet another implementation of the present embodiment, the method further includes:
sending the plug-in acquiring request to the server, if a plug-in has been installed but the version of the plug-in is not the latest version.

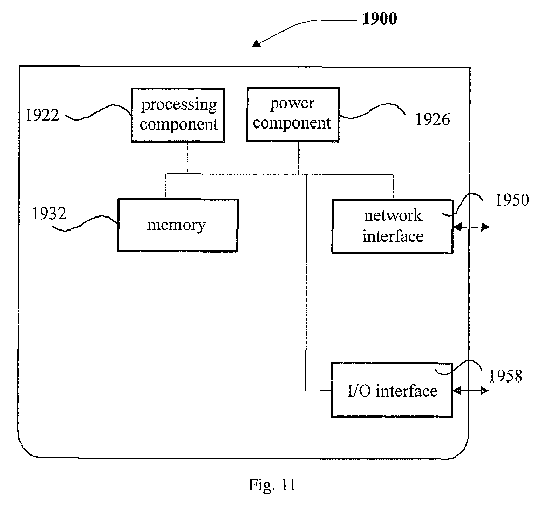

Fig. 11 is a block diagram of a device 1900 for installing a plug-in of a smart device according to another example embodiment. For example, the device 1900 may be provided as a server. Referring to Fig. 11, the device 1900 includes a processing component 1922, which further includes one or more processors, and memory resource represented as a memory 1932, which is configured to store instructions (e.g. an application) executable by the processing component 1922,. The application stored in the memory 1932 may include one or more modules, each module corresponding to a set of instructions. In addition, the processing component 1922 is configured to execute instructions, so as to execute the above methods.

The device 1900 may further include a power component 1926 configured to execute power management for the device 1900, a wired or wireless network interface 1950 configured to connect the device 1900 to a network, and an Input/Output (I/O) interface 1958. The device 1900 may operate via an operation system stored in the memory 1932, in which the operation system may be, for example, a Windows ServerTM, a Mac OS XTM, a UnixTM, a LinuxTM, a FreeBSDTM or similar operation systems.

A non-transitory computer-readable storage medium having stored therein instructions that, when executed by a processor of a mobile device, causes the mobile device to perform a method for installing a plug-in of a smart device, the method including:
receiving a plug-in acquiring request, the plug-in acquiring request including an identifier of the smart device; and
sending a plug-in installation package of the smart device corresponding to the identifier of the smart device according to the plug-in acquiring request, in which the plug-in installation package is configured to install the plug-in in an application, and the application is configured to control the smart device via the plug-in.

In an implementation of the present embodiment, the method further includes:
receiving the plug-in installation package; and
saving and publishing the plug-in installation package received.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. The invention is defined in the appended set of claims.

## Claims

1. A method, applied in a terminal, for installing a plug-in of a smart device, comprising:
receiving a selection instruction for selecting a smart device (S11; S21);
sending a plug-in acquiring request to a server if a plug-in of the smart device is not installed in said terminal, in which the plug-in acquiring request comprises an identifier of the smart device (S12; S22);
receiving a plug-in installation package from the server in response to the plug-in acquiring request (S13; S23); and
running the plug-in installation package and installing the plug-in in an application in said terminal, in which the application is configured to control the smart device via the plug-in (S14; S24).

2. The method according to claim 1, further comprising:
jumping to a user operation interface of the smart device (S25) if the plug-in has been installed.

3. The method according to claim 1 or 2, wherein, said receiving a selection instruction for selecting a smart device comprises:
obtaining, from a server, information of a plurality of smart devices;
outputting the information of the plurality of smart devices on a smart device selection interface; and
receiving the selection instruction input via the smart device selection interface.

4. The method according to any one of claims 1 to 3, further comprising:
jumping to a user operation interface of the smart device (S25) after installing the plug-in in the application configured to control smart devices.

5. The method according to any one of claims 1 to 4, further comprising:
sending the plug-in acquiring request to the server if a plug-in of the smart device is installed in said terminal but the version of said installed plug-in is not a predetermined version.

6. A device for installing a plug-in of a smart device, comprising:
an instruction receiving module (501; 601), configured to receive a selection instruction for selecting a smart device;
a sending module (502; 602), configured to send a plug-in acquiring request to a server if a plug-in of the smart device is not installed in said device, in which the plug-in acquiring request comprises an identifier of the smart device;
an installation package receiving module (503; 603), configured to receive a plug-in installation package from the server in response to the plug-in acquiring request; and
an installing module (504; 604), configured to run the plug-in installation package and install the plug-in in an application in said device, in which the application is configured to control the smart device via the plug-in.

7. The device according to claim 6, further comprising:
a jumping module (605), configured to jump to a user operation interface of the smart device if the plug-in has been installed, or jump to a user operation interface of the smart device after the plug-in is installed in the application configured to control smart devices.

8. The device according to claim 6 or 7, wherein, the instruction receiving module comprises:
an obtaining sub-module (601a), configured to obtain information of a plurality of smart devices sent by the server;
an output sub-module (601b), configured to output the information of the plurality of smart devices on a smart device selection interface; and
a receiving sub-module (601c), configured to receive the selection instruction input via the smart device selection interface.

9. The device according to any one of claims 6 to 8, wherein, the sending module is further configured to:
send the plug-in acquiring request to the server if a plug-in of the smart device is installed in said device but the version of said installed plug-in is not a predetermined version.

10. A computer program including instructions for executing the steps of a method for installing a plug-in of a smart device according to any one of claims 1 to 5 when said program is executed by a computer.

11. A recording medium readable by a computer and having recorded thereon a computer program including instructions for executing the steps of a method for installing a plug-in of a smart device according to any one of claims 1 to 5.
